Europäisches Patentamt

European Patent Office

Office européen des brevets

(11) Publication number: 0 463 572 A1

# EUROPEAN PATENT APPLICATION

(21) Application number: 91110174.9

(22) Date of filing: 20.06.91

(51) Int. Cl.5: B23Q 5/26, B24B 47/20

(30) Priority: 22.06.90 IT 5935890 U

(43) Date of publication of application:
02.01.92 Bulletin 92/01

(84) Designated Contracting States:
AT BE CH DE DK ES FR GB GR IT LI LU NL SE

(71) Applicant: Pegoraro, Ermenegildo, Trading
under the trading style PEGORARO E. & C.
S.n.c.
Via Sega, 20
I-31037 Castione di Loria (Prov. of
Treviso)(IT)

Applicant: Pegoraro, Renato, Trading under
the trading style PEGORARO E. & C. S.n.c.
Via Sega, 20

I-31037 Castione di Loria (Prov. of
Treviso)(IT)

Applicant: Pegoraro, Sergio, Trading under
the trading style PEGORARO E. & C. S.n.c.
Via Sega, 20
I-31037 Castione di Loria (Prov. of
Treviso)(IT)

(72) Inventor: Pegoraro, Ermenegildo
via Sega, 20
I-31037 Castione di Loria (Treviso)(IT)

(74) Representative: Modiano, Guido et al
MODIANO, JOSIF, PISANTY & STAUB
Modiano & Associati Via Meravigli, 16
I-20123 Milano(IT)

(54) Mandrel structure particularly for diamond mills, abrasive grinding wheels and the like.

(57) The mandrel structure (1) comprises a motor (2) for rotating a first shaft (3) which interacts with a second shaft (4) having an end (5) arranged in a protected environment (7). A support (8) for diamond mills or abrasive grinding wheels can be associated with the end (5) of the second shaft (4) arranged in the protected environment (7). Pneumatic actuation members are furthermore provided for causing axial movement of the second shaft (4).

Fig.1

The present invention relates to a mandrel structure particularly for diamond mills, abrasive grinding wheels and the like.

Machines are known for polishing the edges of slabs of marble, granite or the like, which are provided with a single mill for abrading the edge of the workpiece.

This solution, however, is expensive, since the mill wears out, the tool itself is very expensive and tool assembly costs are very high.

The user must furthermore have available as many mills as there are shapes to be imparted to the edges of workpieces.

Machines which also use mandrels as well as mills to polish the edges of marbles or of other decorative materials are also known; said mandrels employ hydraulic or electric drives to rotate shafts which support various tools.

Another technical problem to be solved is furthermore related to maintaining consistency of the peripheral speed or rotation rate (r.p.m.) of the tool in contact with the surface of the material, with the simultaneous maintenance of a pressure of the tool on said surface as a function of the type and depth of the machining to be performed. Electric motors are the least efficient from this point of view. Hydraulic motors are more reliable for solving the technical problem regarding the rotation rate, but they are scarcely effective for maintaining the required pressure.

The adjustment of the working pressure on the surface must furthermore be extremely fine, so that it can be varied easily either by the operator or by automatic adjustment means.

Accordingly, an aim of the present invention is to eliminate or substantially reduce the disadvantages described above in known mandrels by providing a mandrel structure particularly for diamond mills, abrasive grinding wheels and the like, which has modest manufacturing costs and achieves an optimum machining of the edges of slabs of marble, granite or the like.

Within the scope of the above aim, an object of the invention is to provide a mandrel structure wherein it is possible to provide an accurate control of the angular rotation rate (r.p.m.) and of the pressure exerted by a mill on the edge of a slab.

Another object of the present invention is to provide a mandrel structure which allows very fine adjustment of the pressure exerted by the mill on the surface of a material being machined.

Another important object of the invention is to provide a mandrel structure which allows to vary the type of machining on an edge, or on the thickness of the slab, without performing replacements or adaptations with different types of milling tools.

Not least object of the present invention is to provide a mandrel structure which requires very modest installation and maintenance times.

This aim, these objects and others which will become apparent hereinafter are achieved by a mandrel structure particularly for diamond mills, abrasive grinding wheels and the like, for the continuous machining of slabs of marble, granite or the like, characterized in that it comprises a rotating frame supporting at least one motor for rotating at least one first shaft, interacting with a second shaft having at least one end arranged in a protected environment, a support for a diamond mill or abrasive grinding wheels being associable with said one end, pneumatic means being provided for the axial movement of said second shaft.

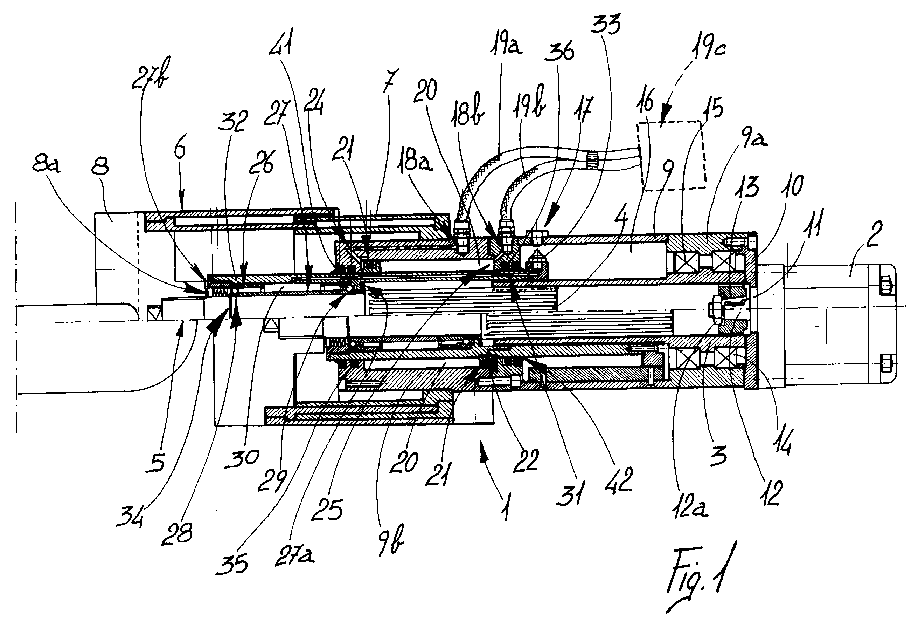

Further characteristics and advantages of the invention will become apparent from the description of a mandrel structure particularly for diamond mills, abrasive grinding wheels and the like, illustrated only by way of non-limitative example in the accompanying drawing, wherein the only figure is a partial sectional view of a mandrel according to the invention.

With reference to the accompanying figure, a mandrel structure, generally indicated by the reference numeral 1, particularly for diamond mills, abrasive grinding wheels and the like, is associated, and supported, by a rotatable frame, which is not illustrated in the drawing.

Said frame supports, possibly on the same plane, one or more identical mandrel structures 1.

A single mandrel structure 1 will now be described; said mandrel structure comprises a motor 2 for rotating a first hollow shaft 3 which is at least partially internally axially grooved and interacts with a second shaft 4 which is at least partially grooved on its surface.

The second shaft 4 has an end 5 arranged in an environment which is protected by a protection labyrinth 6 and by a protection counter-labyrinth 7 and is at least partially threaded on its surface; a support 8 for diamond mills or for abrasive grinding wheels is associable with said end 5. Pneumatic means are furthermore provided for causing axial movement of the second shaft 4.

The mandrel 1 comprises a frame 9 for supporting the motor 2 and for limiting the stroke of the first shaft 3 and of the second shaft 4. Said frame 9 comprises a fixed portion 9a and a movable portion 9b which is rigidly associated with the second shaft 4. The protection labyrinth 6 is rigidly associated with the movable portion 9b, whereas the protection counter-labyrinth 7 is rigidly associated with the fixed portion 9a. At an end 10 of the blind portion 9a there is an opening 11 through which an axis 12 of the motor 2 penetrates within the fixed portion 9a and within the cavity of the first shaft 3.

A gear 13 is rigidly rotationally associated with the axle 12 and can be fixed to said axle 12 by means of a nut 12a which engages with an at least partial thread defined on the axle 12. The gear 13 engages its teeth in the grooves of the first shaft 3, rotating said first shaft 3. Ball bearings 14 and 15 are provided between the first shaft 3 and the fixed portion 9a, and the first shaft 3 and the fixed portion 9a furthermore delimit a first annular chamber 16 in which, by means of a closeable feeder 17, it is possible to insert lubricant or grease for the ball bearings. A first opening 18a and a second opening 18b for the feed and outflow of pressurized fluids are furthermore provided on the outer surface of the fixed portion 9a; said openings are in communication with a respective first pneumatic tube 19a and with a second pneumatic tube 19b, which communicate the first opening 18a and the second opening 18b with a pneumatic compressor 19c.

A second annular chamber 20 is delimited between the fixed portion 9a and the movable portion 9b of the frame 9, and an annular abutment 21 is slidingly mounted inside said annular chamber 20; a first sealing ring 22 is inserted within said annular abutment 21. Said annular abutment 21 is inserted in a groove-like seat 23 defined on an outer surface of the movable portion 9b which faces the second annular chamber 20. A first duct 24 connects the second annular chamber 20 upstream of the annular abutment 21 to the first opening 18a, whereas a second duct 25 connects the second annular chamber 20 downstream of the annular abutment 21 to the second opening 18b. When pressurized fluid is fed into the second opening 18b, the movable portion 9b moves axially outward, whereas when a pressurized fluid is fed into the first opening 18a, the movable portion 9b is retracted into the fixed portion 9a.

One thus obtains pneumatic means, or rather a pneumatic circuit comprising the compressor 19c which, by means of the first pneumatic tube 19a, the second pneumatic tube 19b, the first opening 18a and the second opening 18b, is connected to the second annular chamber 20 through the first duct 24 or through the second duct 25, by actuating the annular abutment 21, as described in greater detail hereinafter.

The movable portion 9b furthermore comprises an annular spacer 26 provided with a supporting surface 27, which is rigidly rotationally associated with the second shaft 4 and with ball bearings 28 and 29. The annular spacer 26 delimits a third annular chamber 30 at the ends of which the ball bearings 28 and 29 are arranged. The third annular chamber communicates with the first annular chamber 16 by means of a lubrication duct 31 which is defined within an annular element 32 and ends, inside the first annular chamber 16, with a grease aspirator 33. The annular element 32 is rigidly axially associated with the movable portion 9b and moves inside the first annular chamber 16 like a piston. The annular spacer 26 can be locked within the movable portion 9b by means of a snap ring or "Seeger" ring or a mechanical block 34.

The supporting surface 27 furthermore comprises a first annular raised portion 27a, against which an annular portion 4a of the second shaft 4 abuts, and a second annular raised portion 27b which abuts against a portion 8a of the support 8. The annular spacer 26 thus acts as traction element for the movement of the second shaft 4 and the support 8.

In order to ensure fluid-tightness of the second annular chamber 20, which as previously described is part of the pneumatic circuit for the axial translatory motion of the movable portion 9b, and in order to prevent the unwanted escape of lubricant or grease from the first annular chamber 16, a second sealing ring 35 and a third sealing ring 36 are interposed between the fixed portion 9a and the movable portion 9b and can be inserted within respective annular grooves 37 and 38 defined in the contact surfaces 39 and 40 between the fixed portion 9a and the movable portion 9b.

A first annular gasket 41 and a second annular gasket 42 are furthermore inserted on the same contact surfaces 39 and 40, and respectively face toward the environment protected by the protection labyrinth 6, the protection counter-labyrinth 7 and toward the first annular chamber 16. The first annular gasket 41 scrapes any impurities clinging to the surface of the movable portion 9b within the protected environment, whereas the second annular gasket 42 scrapes any excess grease which may be deposited on the annular element 32 inside the first annular chamber 16.

The operation of the invention is briefly as follows: once a diamond mill or an abrasive grinding wheel or other tools for the intended machining have been installed on the support 8, the motor 2 is switched on, rotating, by means of the axle 12, the gear 13 and the first shaft 3, the second shaft 4, which is directly connected to the support 8 by means of the end portion 5. By feeding pressurized fluid from the compressor 19c into the second pneumatic tube 19b, the fluid is fed into the chamber 20 downstream of the annular abutment 21 by means of the second opening 18b and the second duct 25, thus pushing the annular abutment 21 and extracting the annular spacer 26.

In its motion, the annular spacer 26 entrains the support 8 and thus the shaft 4. The pressure which the tool mounted on the support 8 exerts on the part being machined thus depends exclusively on the pressure of the fluid fed into the pneumatic circuit, and not on the motor 2. Thus the constancy of the rotation rate, or rather of the rpm rate of the tool, is advantageously independent of the pressure exerted by said tool on the part being machined.

Once machining is completed, pressurized fluid is fed by the compressor 19c into the first pneumatic tube 19d and thus into the chamber 20, by means of the first opening 18a and the first duct 24, upstream of the annular abutment 21, thus retracting the shaft 4, and therefore the support 8, within the fixed portion 9a.

The mandrel structure according to the invention thus achieves the intended aim and objects, since it is possible to machine the edges of slabs of marble, granites or the like, giving them the required configuration, by virtue of the rotation which can be imparted to the supporting rotating frame of said structure.

It is also noted that said structure allows to achieve, among its various advantages, also that of machining the slabs continuously and thus of having great operating flexibility; in fact, by varying the advancement rate of the slab it is possible to preset the number of slabs machined, obtaining in any case a considerable hourly production rate.

No modification of the structure as the configuration of the edge or of the thickness of the slab varies (toroidal machining with different radii) is in fact required.

The structure furthermore allows to perform a considerable selection of operating conditions regarding both the rotation rate (r.p.m.) and the pressure exerted by the mill on the slab.

In practice, the materials employed, as well as the dimensions, may be any according to requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Mandrel structure particularly for diamond mills, abrasive grinding wheels and the like, for the continuous machining of slabs of marble, granite or the like, characterized in that it comprises a rotatable frame supporting at least one motor for rotating at least one first hollow shaft which interacts with a second shaft having one end, arranged in a protected environment, a support for a diamond mill or abrasive grinding wheels being associable with said one end, pneumatic means being provided for the axial movement of said second shaft.

2. Mandrel structure according to claim 1, characterized in that said motor supports, on one of its own axes, a gear which engages in an at least partial internal axial groove set of said first shaft.

3. Mandrel structure according to claims 1 and 2, characterized in that said first shaft engages in a complementarily shaped set of teeth defined on the surface of said second shaft.

4. Mandrel structure according to claim 1, characterized in that it comprises a frame for supporting said motor and for limiting the stroke of said first and second shafts, said frame comprising a first fixed portion, within which said first shaft is rotatably associable, and a second axially movable portion which is associable with said second shaft.

5. Mandrel structure according to claims 1 and 4, characterized in that said fixed portion defines a first annular chamber within which it is possible to insert grease for lubricating ball bearings by means of a closeable feeder, an annular element which is rigidly associated with said movable portion and penetrates within said first chamber, said annular element being provided with a lubrication duct and with a grease aspirator, said duct connecting said first annular chamber to a third annular chamber which is delimited by a spacer rigidly associated with said movable portion.

6. Mandrel structure according to claims 1 and 5, characterized in that said spacer has a surface which is rigidly rotationally associated with said second shaft and is connected to said movable portion by means of ball bearings which are arranged at the ends of said third annular chamber, said surface having a first annular raised portion which affects an annular portion of said second movable shaft and having a second annular raised portion which affects an annular surface of said support.

7. Mandrel structure according to claims 1, 4 and 6, characterized in that said fixed portion comprises a second annular chamber within which an annular abutment can be inserted with a translatory motion, said annular abutment being insertable within an annular groove defined on the surface of said movable portion which faces within said second annular chamber, said annular abutment comprising a first sealing ring.

8. Mandrel structure according to claims 1 and 7, characterized in that said pneumatic means comprise a second annular chamber, connected to a pneumatic compressor by means of a first duct and a second duct, said first duct being defined upstream of said annular abutment and within said fixed portion of said frame and ending within a first opening wherein a first pneumatic tube is provided for connection to said compressor, said second duct being defined downstream of said annular abutment and within said fixed portion of said frame and ending within a second opening, wherein a second pneumatic tube is provided for connection to said compressor.

9. Mandrel structure according to claim 1, characterized in that it comprises a protection labyrinth which is rigidly associated with said movable portion of said frame and is translatorily insertable within a protection counter-labyrinth which is rigidly associated with said fixed portion of said frame, said protected environment being defined on said support by said protection labyrinth and by said protection counter-labyrinth.

10. Mandrel structure according to claim 1, characterized in that it comprises ball bearings interposed between said fixed portion and said first shaft.

11. Mandrel structure according to claim 1, characterized in that it comprises, within annular grooves defined on surfaces of contact between said fixed portion and said movable portion, a second sealing ring said a third sealing ring for said second annular chamber.

12. Mandrel structure according to claim 1, characterized in that it comprises, on surfaces of contact between said fixed portion and said movable portion, a first gasket and a second gasket, said first gasket being adapted for protecting said second annular chamber from deposits, said second gasket being suitable for scraping excess grease deposited on said annular element within said first annular chamber.

Fig. 1

| DOCUMENTS CONSIDERED TO BE RELEVANT | | | EP 91110174.9 |

EP 91110174.9

| Category | Citation of document with indication, where appropriate, of relevant passages | Relevant to claim | CLASSIFICATION OF THE APPLICATION (Int. Cl. 5) |
|---|---|---|---|
| A | DE - A - 2 232 471 (S.T. DUPONT) * Fig. 1 * | 1,2,3, 4,7,8 | B 23 Q 5/26 B 24 B 47/20 |
| A | US - A - 2 930 261 (EMRICK) * Fig. 1 * | 1,2,3, 4,7,8 | |
| A | GB - A - 2 132 522 (MAAG) * Fig. 1 * | 1,2,3, 4,7,8 | |

TECHNICAL FIELDS SEARCHED (Int. Cl.5)

B 23 B
B 23 Q
B 24 B
B 25 D
F 16 H

The present search report has been drawn up for all claims

| Place of search | Date of completion of the search | Examiner |
|---|---|---|
| VIENNA | 23-09-1991 | GLAUNACH |